# EUROPÄISCHE PATENTANMELDUNG

(11) **EP 3 415 049 A1**
(43) Veröffentlichungstag der Anmeldung: **19.12.2018**
(21) Anmeldenummer: 18176896.1
(22) Anmeldetag: 11.06.2018
(51) Int. Cl.: A47J 31/18, A47J 31/06

(54) **TEEAUTOMAT MIT EINER PRESSVORRICHTUNG UND VERFAHREN ZUM BETRIEB EINES TEEAUTOMATEN**

(30) Priorität: 12.06.2017 DE 102017112902
(71) Anmelder: Vorwerk & Co. Interholding GmbH, 42275 Wuppertal (DE)
(72) Erfinder: HAHN, Pia, 58332 Schwelm (DE); BAPAT, Aniket, 40882 Ratingen (DE); TAMM, Steffen, 40219 Düsseldorf (DE); GROOM, Dr. Sascha, 48607 Ochtrup (DE); ZILS, Jürgen, 51399 Burscheid (DE); BÜTTNER, Christian, 42281 Wuppertal (DE)
(74) Vertreter: Cohausz & Florack

(57) **Zusammenfassung**

Die Erfindung betrifft einen Teeautomat (2, 52, 72, 92), eingerichtet zur automatischen Zubereitung von Teegetränken in einer Brühkammer (4), wobei der Teeautomat (2, 52, 72, 92) eine Pressvorrichtung (42, 54, 80, 102) aufweist, die dazu eingerichtet ist, eine zur Zubereitung eines Teegetränks verwendete Zutatenmenge (24), insbesondere eine Menge von Teeblättern, separat vom zubereiteten Teegetränk zu einem Pressling (44) zu verpressen. Die Erfindung betrifft weiterhin ein Verfahren zum Betrieb eines Teeautomaten (2, 52, 72, 92), bei dem mit einer Zutatenmenge (24), insbesondere einer Menge von Teeblättern, und einer Wassermenge in einer Brühkammer (4) ein Teegetränk zubereitet wird und bei dem die Zutatenmenge (24) nach der Zubereitung des Teegetränks separat von dem zubereiteten Teegetränk zu einem Pressling (44) verpresst wird.

## Beschreibung

Die Erfindung betrifft einen Teeautomaten, eingerichtet zur automatischen Zubereitung von Teegetränken in einer Brühkammer, und ein Verfahren zum Betrieb eines Teeautomaten.

Die Zubereitung von Teegetränken hat eine lange Tradition in asiatischen Ländern und in Indien, die später in Europa und arabischen Ländern übernommen wurde. Aus dieser Tradition ist eine Vielfalt von Mitteln zur Zubereitung von Teegetränken bekannt. Bei den meisten verwendeten Techniken werden pflanzliche Zutaten wie zum Beispiel lose Teeblätter oder Blüten mit heißem Wasser aufgegossen und am Ende des Aufgusses abgeseiht. Durch das Abseihen der pflanzlichen Zutaten wird verhindert, dass weitere Aromastoffe aus den Zutaten in das Teegetränk gelangen. Werden die pflanzlichen Zutaten nicht aus dem Teegetränk entfernt, können zum Beispiel zu viele Bitterstoffe in das Teegetränk gelangen und dieses bitter machen.

Das Abseihen wurde mit Erfindung des Teebeutels vereinfacht, jedoch bevorzugen manche Teetrinker die Zubereitung von Teegetränken mit losen Teeblättern.

Zwar wurde auch die Entsorgung loser Teeblätter durch die Verwendung von Teesieben oder Teeeiern vereinfacht, gestaltet sich jedoch weiterhin als relativ aufwändig und verursacht unerwünschte Verschmutzungen. Weiterhin haben sich die aus dem Stand der Technik bekannten Lösungen für eine automatische Zubereitung von Teegetränken als wenig praktikabel erwiesen.

Eine weitere Methode zum Aufbrühen von Getränken ist für die Zubereitung von Kaffee bekannt. Bei dieser Methode wird das Kaffeepulver in einer Brühkammer mit heißem Wasser aufgegossen und am Ende des Brühvorgangs durch das Herunterdrücken eines Siebeinsatzes am Boden der Brühkammer gepresst. Derartige Geräte sind auch unter dem Namen Pressstempelkanne oder "French Press" bekannt. Für die Zubereitung von Teegetränken ist ein solches Gerät ungeeignet, da die in der Brühkammer verbleibende Zutatenmenge die Eigenschaften des Teegetränks weiter verändert. Weiterhin bleibt die Entsorgung der Zutatenmenge aufwändig.

Für die automatische Zubereitung von Kaffeegetränken sind weiterhin Getränkeautomaten bekannt, die heißes Wasser durch eine in das Gerät eingesetzte, mit Kaffeepulver gefüllte Kapsel leiten, die nach dem Zubereitungsvorgang einfach entsorgt werden kann. Solche Automaten können allerdings in den meisten Fällen nur das Volumen von maximal zwei Tassen ausgeben. Zudem sind derartige Getränkeautomaten für die Zubereitung von Teegetränken weniger geeignet, da Teegetränke typischerweise nicht mit Pulver, sondern mit größeren Blatt- oder Blütenstücken zubereitet werden, die eine längere Brühzeit erfordern, als die erwähnte Zubereitungsmethode ermöglicht. Weiterhin besteht das Bedürfnis, nicht nur einzelne Tassen, sondern größere Mengen Teegetränk automatisch zuzubereiten.

Es sind weiterhin Getränkeautomaten bekannt, die die automatische Zubereitung von Kaffeegetränken mit ganzen Kaffeebohnen ermöglichen. Nach Verwendung wird der Kaffeesatz in einen Abfallbehälter geführt. Auch bei diesen Automaten bleibt das maximale Ausgabevolumen jedoch begrenzt. Zudem kommen derartige Geräte für die Zubereitung von Teegetränken nicht in Frage.

Während Kaffeeautomaten zum automatischen Zubereiten von Kaffeegetränken seit langem bekannt sind, sind erst in jüngerer Zeit Teeautomaten entwickelt worden, die speziell zur automatischen Zubereitung von Teegetränken vorgesehen sind.

Vor diesem Stand der Technik liegt der vorliegenden Erfindung die Aufgabe zugrunde, die Zubereitung von Teegetränken sowie die Entsorgung verwendeter Zutaten zu vereinfachen.

Diese Aufgabe wird bei einem Teeautomaten, eingerichtet zur automatischen Zubereitung von Teegetränken in einer Brühkammer, erfindungsgemäß dadurch gelöst, dass der Teeautomat eine Pressvorrichtung aufweist, die dazu eingerichtet ist, eine zur Zubereitung eines Teegetränks verwendete Zutatenmenge, insbesondere eine Menge von Teeblättern, separat vom zubereiteten Teegetränk zu einem Pressling zu verpressen.

Weiterhin wird die oben genannte Aufgabe erfindungsgemäß gelöst durch ein Verfahren zur Steuerung eines Teeautomaten, insbesondere des zuvor beschriebenen Teeautomaten, bei dem mit einer Zutatenmenge, insbesondere einer Menge von Teeblättern, und einer Wassermenge in einer Brühkammer ein Teegetränk zubereitet wird und bei dem die Zutatenmenge nach der Zubereitung des Teegetränks separat von dem zubereiteten Teegetränk zu einem Pressling verpresst wird.

Der Teeautomat ist dazu eingerichtet, automatisch Teegetränke in einer Brühkammer zuzubereiten. Zu diesem Zweck weist der Teeautomat insbesondere eine Brühkammer auf, in der eine Zutatenmenge über eine vorgegebene Brühdauer mit einer vorgegebenen Menge Wasser in Kontakt gebracht werden kann, sowie eine Steuereinrichtung, die die automatische Zubereitung von Teegetränken in der Brühkammer steuert.

Die Zubereitung des Teegetränks in einer Brühkammer ermöglicht, den Brühvorgang auf beliebigen Brühdauern zu erstrecken. Weiterhin kann die Volumenkapazität der Brühkammer so gewählt sein, dass eine Teegetränkemenge für mehrere Tassen oder eine Kanne zubereitet werden kann. Die Brühkammer kann einen Auslass für das fertige Teegetränk aufweisen.

Darüber hinaus weist der Teeautomat noch weitere Komponenten auf, die für die automatische Zubereitung von Teegetränken erforderlich sind. Insbesondere kann der Teeautomat eine oder mehrere der folgenden Komponenten aufweisen: eine Heißwasserversorgung, eine Einfüllöffnung für lose Teeblätter, einen Siebeinsatz und eine Verfahreinrichtung zum Bewegen des Siebeinsatzes in der Brühkammer, eine Ausgabeeinrichtung zur Ausgabe des fertigen Teegetränks aus der Brühkammer.

Weiterhin kann der Teeautomat eine Benutzerschnittstelle aufweisen, die die Eingabe von Brühparametern und/oder die manuelle Einstellung des Teeautomaten ermöglicht.

Der Teeautomat kann weiterhin eine Auffangschale aufweisen, um Tropfen, die aus der Brühkammer auslaufen, aufzunehmen. Die Auffangschale kann auch für das Aufnehmen weiterer Abwässer und Abfälle verwendet werden.

Unter einem Teegetränk werden vorliegend Getränke verstanden, die auf Basis eines Aufgusses fester pflanzlicher Zutaten zubereitet werden. Bei den pflanzlichen Zutaten kann es sich um Teeblätter oder Teepflanze handeln, aber auch um Blätter anderer Pflanzen, Blüten, Wurzeln, Rinde oder ähnliches. Teegetränke können mit heißem, warmem oder kaltem Wasser zubereitet werden. Die für einen Aufguss verwendete Menge an pflanzlichen Zutaten wird als Zutatenmenge bezeichnet.

Der Teeautomat weist eine Pressvorrichtung auf, um die Zutatenmenge nach der Zubereitung des Teegetränks zu einem Pressling zu verpressen. Auf diese Weise kann die Zutatenmenge nach dem Brühvorgang kompaktiert werden, so dass sie sich einfacher entsorgen lässt. Beim Verpressen werden zudem restliche Flüssigkeiten aus der Zutatenmenge ausgepresst, wodurch sich das Volumen der verpressten Zutatenmenge verringert. Weiterhin weist die verpresste Zutatenmenge dadurch eine geringere Feuchtigkeit auf, wodurch unerwünschtes Bakterienwachstum oder ähnliches unterdrückt wird, insbesondere wenn die verpresste Zutatenmenge in dem Teeautomat über längeren Zeit gelagert wird.

Die Pressvorrichtung ist dazu eingerichtet, die Zutatenmenge separat vom zubereiteten Teegetränk zu einem Pressling zu verpressen. Die Zutatenmenge wird demnach zunächst vom zubereiteten Teegetränk separiert, bevor sie zu dem Pressling verpresst wird. Auf diese Weise kann eine geringere Restfeuchtigkeit des Presslings erreicht werden. Weiterhin kann eine Beeinflussung des Teegetränks durch beim Verpressen aus der Zutatenmenge austretende Geschmacks- und Aromastoffe vermieden werden. Zu diesem Zweck weist der Teeautomat vorzugsweise einen Siebeinsatz auf, mit dem die Zutatenportion von dem zubereiteten Teegetränk separiert werden können.

Die Pressvorrichtung weist insbesondere mindestens ein bewegliches Element, insbesondere mit einer Pressfläche auf, um eine Druckbelastung auf die zu verpressende Zutatenmenge auszuüben. Vorzugsweise weist die Pressvorrichtung eine bewegliche Pressfläche und eine gegenüberliegende feste Pressfläche auf, gegen die die bewegliche Pressfläche zum Verpressen der Zutatenmenge bewegt werden kann. Das Verpressen einer für die Zubereitung eines Teegetränks verwendeten Zutatenmenge erfolgt vorzugsweise in einem Pressvorgang.

Die Zutatenmenge wird durch die Pressvorrichtung zu einem Pressling verpresst, zum Beispiel zu einer Tabletten-Form. Unter einem Pressling wird ein fester Kuchen aus der Zutatenmenge verstanden, der vorzugsweise einen gewissen Zusammenhalt aufweist. Ein solcher Pressling lässt sich sauberer und einfacher entsorgen als die lose für die Zubereitung des Teegetränks verwendete Zutatenmenge.

Im Folgenden werden verschiedene Ausführungsformen des Teeautomaten und des Verfahrens beschrieben, wobei die einzelnen Ausführungsformen jeweils sowohl für den Teeautomaten als auch für das Verfahren gelten. Zudem sind die einzelnen Ausführungsformen untereinander kombinierbar.

Bei einer ersten Ausführungsform weist der Teeautomat Transportmittel auf, die dazu eingerichtet sind, die Zutatenmenge zur Pressvorrichtung zu transportieren. Die Transportmittel sind vorzugsweise durch die Steuereinrichtung des Teeautomaten ansteuerbar, so dass die Zutatenmenge am Ende eines Brühvorgangs automatisch zur Pressvorrichtung transportiert werden kann. Vorzugsweise wird die Zutatenmenge mit den Transportmitteln aus der Brühkammer heraus transportiert. Der Transport der verwendeten Zutatenmenge aus der Brühkammer heraus vermeidet, dass weitere Aroma- und Bitterstoffe, die noch in der verwendeten Zutatenmenge enthalten sind und ggf. durch Sieböffnungen eines in der Brühkammer verwendeten Siebeinsatz weiter abtropfen, in das fertig zubereitete Teegetränk gelangen.

Bei einer weiteren Ausführungsform umfassen die Transportmittel einen in der Brühkammer verfahrbaren Siebeinsatz. Die Zutatenmenge kann somit nach dem Brühen durch Anheben des Siebeinsatzes von dem fertigen Teegetränk getrennt und dann mit dem Siebeinsatz und ggf. weiteren Transportmitteln zu der Pressvorrichtung transportiert werden.

Bei einer weiteren Ausführungsform weist die Pressvorrichtung eine bewegliche Pressplatte zum Verpressen der Zutatenmenge auf, wobei der in der Brühkammer verfahrbare Siebeinsatz die bewegliche Pressplatte bildet. Auf diese Weise erfüllt der Siebeinsatz gleichzeitig zwei Funktionen, nämlich einerseits zum Trennen der Zutatenportion vom fertigen Teegetränk und andererseits als bewegliches Element der Pressvorrichtung. Die Ausgestaltung der Pressplatte als Siebeinsatz ermöglicht zudem, dass das in der Zutatenmenge enthaltene Wasser während des Pressvorgangs durch die Sieböffnungen des Siebeinsatzes ablaufen kann.

Die Pressvorrichtung kann im Bereich der Brühkammer angeordnet sein, beispielsweise unmittelbar oberhalb der Brühkammer. Bei einer solchen Ausgestaltung kann beispielsweise der verfahrbare Siebeinsatz in einem ersten Schritt nach oben fahren, um die Zutatenmenge vom fertigen Teegetränk zu trennen und dann, zum Beispiel nach der Ausgabe des fertigen Teegetränks aus der Brühkammer, in einem zweiten Schritt weiter nach oben fahren, bis die Zutatenmenge durch die Bewegung des Siebeinsatzes gegen einen Deckel oder eine andere Pressplatte der Pressvorrichtung zu einem Pressling verpresst ist.

Alternativ kann die Pressvorrichtung auch abseits der Brühkammer angeordnet sein, so dass das während des Pressvorgangs austretende Wasser nicht direkt in die Brühkammer gelangen kann. Dies hat den Vorteil, dass das fertige Teegetränk während des Pressvorgangs noch in der Brühkammer verbleiben kann, ohne während des Pressvorgangs aus der Zutatenmenge austretendes Wasser verunreinigt zu werden.

Bei einer weiteren Ausführungsform weist die Pressvorrichtung einen Abfluss auf, durch den beim Verpressen der Zutatenmenge austretendes Wasser in die Brühkammer geführt wird. Das beim Verpressen aus der Zutatenmenge austretende Wasser kann auf diese Weise durch die Brühkammer abgeführt werden, beispielsweise in eine unterhalb der Brühkammer angeordnete Auffangschale oder einen anderen Abwasserbehälter. Eine separate Abführung für das beim Verpressen der Zutatenmenge austretenden Wassers ist dadurch entbehrlich. Das Verpressen erfolgt bei dieser Ausführungsform vorzugsweise, nachdem das Teegetränk aus der Brühkammer ausgegeben wurde. Dadurch werden die Ausgabe des Teegetränks und der Pressvorgang zeitlich voneinander getrennt, so dass das auszugebende Teegetränk von dem beim Pressvorgang durch die Brühkammer geleiteten Wasser unbeeinträchtigt bleibt.

Die Pressvorrichtung kann insbesondere oberhalb, insbesondere direkt über der Brühkammer angeordnet sein. Dies gestattet eine platzsparende gesamte Ausgestaltung des Teeautomaten.

Die Steuereinrichtung kann dazu eingerichtet sein, nach Durchführung des Pressvorgangs die Ausgabe eines Spülwasserstoßes in die Brühkammer zu veranlassen, um Reste des in die Brühkammer geführten Wassers aus dem Pressvorgang aus der Brühkammer auszuspülen, vorzugsweise in eine Auffangschale oder einen Abwasserbehälter des Teeautomaten.

Bei einer weiteren Ausführungsform weist die Pressvorrichtung einen Abfluss auf, durch den beim Verpressen der Zutatenmenge austretendes Wasser getrennt von der Brühkammer zu einem Abwasserbehälter geführt wird. Dadurch werden Verschmutzungen der Brühkammer durch das aus der verwendeten Zutatenmenge austretende Wasser und eventuelle Feinpartikel vermieden. Ein Spülvorgang der Brühkammer ist somit weniger häufig erforderlich. Weiterhin kann auf diese Weise die Verunreinigung eines sich in der Brühkammer befindlichen Teegetränks vermieden werden, so dass das Teegetränk auch erst nach dem Pressvorgang aus der Brühkammer ausgelassen werden kann.

Bei dem Abwasserbehälter kann es sich um die Auffangschale oder um ein davon separates Gefäß handeln. Bei Verwendung der Auffangschale als Abwasserbehälter ist eine kompaktere Bauweise möglich, da auf ein separates Gefäß verzichtet werden kann.

Bei einer entsprechenden Ausführungsform des Verfahrens wird während des Pressvorgangs aus der Zutatenmenge austretendes Wasser separat von dem zubereiteten Teegetränk abgeführt. Auf diese Weise wird ein Teegetränk in der Brühkammer nicht durch das beim Verpressen austretende Wasser beeinträchtigt und das zubereitete Teegetränk kann während des Pressvorgangs weiter in der Brühkammer aufbewahrt werden.

Bei einer weiteren Ausführungsform weist der Teeautomat einen Tresterbehälter zur Aufnahme des Presslings auf. Auf diese Weise muss der Pressling nicht nach jedem Pressvorgang entsorgt werden, sondern kann in dem Tresterbehälter gelagert werden, um zusammen mit weiteren Presslingen zu einem späteren Zeitpunkt entsorgt zu werden. Der Tresterbehälter kann auch das beim Verpressen aus der Zutatenmenge austretende Wasser aufnehmen. Vorzugsweise wird das beim Verpressen aus der Zutatenmenge austretende Wasser jedoch getrennt vom Pressling aufbewahrt oder abgeführt, um Bakterienwachstum oder Schimmelbildung zu unterdrücken. Vorzugsweise sind Transportmittel vorgesehen, um den Pressling von der Pressvorrichtung in den Tresterbehälter zu transportieren. Die Pressvorrichtung kann auch derart angeordnet sein, dass der Pressling nach dem Pressvorgang in den Tresterbehälter fällt.

Bei einer weiteren Ausführungsform weist die Pressvorrichtung einen Entnahmeträger auf, vorzugsweise in Form einer Pressplatte der Pressvorrichtung, und die Pressvorrichtung ist dazu eingerichtet, den Pressling auf dem Entnahmeträger in einer Entnahmeposition zu positionieren, so dass der Pressling von oder mit dem Entnahmeträger aus dem Teeautomaten entnehmbar ist. Dadurch kann der Pressling aus dem Teeautomaten ohne Einsatz von weiteren Hilfsmitteln entsorgt werden. Diese Ausgestaltung ermöglicht eine hygienischere und einfachere Nutzung des Teeautomaten. Dadurch kann zudem auf einem Tresterbehälter verzichtet werden, um eine kompaktere Bauweise zu ermöglichen.

Bei einer entsprechenden Ausführungsform des Verfahrens wird der Pressling in einer Entnahmeposition positioniert, sodass der Pressling durch eine Entnahmeöffnung aus dem Teeautomaten entnehmbar ist. Dadurch kann der Pressling direkt nach dem Pressvorgang entsorgt werden. Wenn die Pressvorrichtung einen Entnahmeträger aufweist, kann der Entnahmeträger ein Teil der Pressvorrichtung sein, wie zum Beispiel die Pressplatte. Die Entnahmeöffnung kann eine Öffnung des Gehäuses des Teeautomaten und/oder eine Öffnung in der Pressvorrichtung sein.

Bei einer weiteren Ausführungsform des Teeautomaten ist eine Steuereinrichtung zur Steuerung des Teeautomaten vorgesehen, die dazu eingerichtet ist, das Verpressen der Zutatenmenge zu steuern. Auf diese Weise kann der Pressvorgang automatisch erfolgen, beispielsweise am Ende eines Brühvorgangs, nach dem Auslassen eines Teegetränks aus der Brühkammer oder auf Anforderung durch den Nutzer über eine Eingabe an einer Benutzerschnittstelle.

Bei einer weiteren Ausführungsform weist der Teeautomat eine Steuereinrichtung zur Steuerung des Teeautomaten auf, die dazu eingerichtet ist, den Teeautomaten entsprechend dem zuvor beschriebenen Verfahren oder einer Ausführungsform davon zu steuern. Zu diesem Zweck kann die Steuereinrichtung beispielsweise einen Mikroprozessor und einen damit verbundenen digitalen Speicher aufweisen, auf dem Befehle gespeichert sind, deren Ausführung auf dem Mikroprozessor die Durchführung des Verfahrens bewirkt.

Bei einer weiteren Ausführungsform des Verfahrens wird die Pressvorrichtung nach einem Pressvorgang gespült. Die Pressvorrichtung kann nach dem Pressvorgang noch Teile der verpressten Zutatenmenge enthalten, was bei wiederholten Pressvorgängen zu einer Verstopfung der Pressvorrichtung führen kann. Durch das Spülen der Pressvorrichtung werden derartige Reste entfernt und die Pressvorrichtung gereinigt. Die Pressvorrichtung kann beispielsweise mittels eines Spülwasserstoßes in einem Spülvorgang gespült werden. Das Wasser, das für den Spülvorgang verwendet worden ist, kann durch den Abfluss der Pressvorrichtung zu dem Abwasserbehälter geführt werden.

Bei einer entsprechenden Ausführungsform des Teeautomaten ist an der Pressvorrichtung eine Wasserzuführung zur Ausgabe eines Spülwasserstoßes vorgesehen und die Steuereinrichtung ist dazu eingerichtet, die Ausgabe eines Spülwasserstoßes nach einem Pressvorgang zu veranlassen. Bei einer weiteren Ausgestaltung des Teeautomaten, kann das Spülwasser durch den Abfluss der Pressvorrichtung in die Brühkammer geführt werden.

Weitere Merkmale und Vorteile der vorliegenden Erfindung ergeben sich aus der nachfolgenden Beschreibung mehrerer Ausführungsbeispiele, wobei auf die beigefügte Zeichnung Bezug genommen wird. In der Zeichnung zeigen
- Fig. 1a bis 1e: eine schematische Darstellung eines ersten Ausführungsbeispiels des Teeautomaten,
- Fig. 2a und 2b: eine schematische Darstellung eines zweiten Ausführungsbeispiels des Teeautomaten,
- Fig. 3a bis 3c: eine schematische Darstellung eines dritten Ausführungsbeispiels des Teeautomaten,
- Fig. 4: eine schematische Darstellung eines vierten Ausführungsbeispiels des Teeautomaten und
- Fig. 5a bis 5c: eine schematische Darstellung einer Pressvorrichtung für ein Ausführungsbeispiel des Teeautomaten.

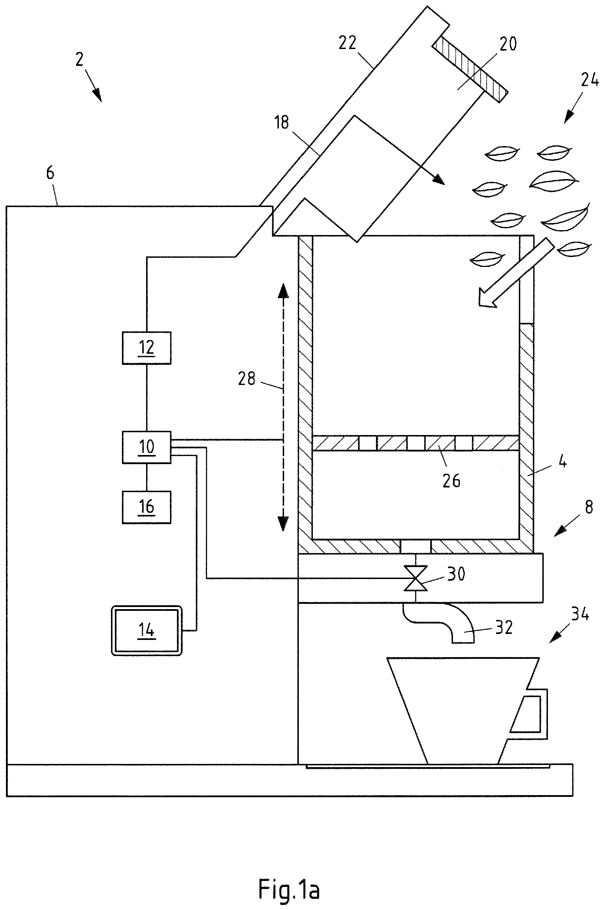

Die Fig. 1a bis 1e zeigen ein Ausführungsbeispiel eines Teeautomaten 2, der zur automatischen Zubereitung von Teegetränken in einer Brühkammer 4 eingerichtet ist.

Zu diesem Zweck weist der Teeautomat ein Gehäuse 6 mit einer Brühkammeraufnahme 8 auf, in die die Brühkammer 4 einsetzbar ist. Der Teeautomat 2 weist also eine entnehmbare Brühkammer 4 auf. Stattdessen könnte die Brühkammer auch integral mit dem Gehäuse 6 ausgebildet sein.

In dem Gehäuse 6 sind weitere Komponenten angeordnet, die für die automatische Zubereitung von Teegetränken erforderlich sind. So weist der Teeautomat eine Steuereinrichtung 10, eine Heißwasserversorgung 12 und eine Nutzerschnittstelle 14 in Form eines Touchscreens auf.

Die Steuereinrichtung 10 ist zur Steuerung des Teeautomaten eingerichtet. Zu diesem Zweck ist auf einem mit der Steuereinrichtung 10 verbundenen Speicher 16 ein Programm mit Befehlen gespeichert, deren Ausführung auf einem Mikroprozessor der Steuereinrichtung 10 eine Steuerung der einzelnen Komponenten des Teeautomaten 2 bewirkt. Beispielsweise kann die Steuereinrichtung 10 zur automatischen Zubereitung eines Teegetränks die Heißwasserversorgung 12 ansteuern, so dass diese zur Durchführung eines Brühvorgangs über eine entsprechende Zuleitung 18 heißes Wasser durch einen Verteilerkopf 20 in die Brühkammer 4 leitet.

Weiterhin kann die Steuereinrichtung 10 über die Nutzerschnittstelle 14 die Ausgabe von Nutzerinformationen bewirken, beispielsweise dass ein Brühvorgang abgeschlossen ist, oder Nutzereingaben empfangen, beispielsweise einen Nutzerbefehl zur Durchführung eines Brühvorgangs.

Um mit dem Teeautomaten 2 ein Teegetränk zuzubereiten, kann ein Nutzer den als schwenkbaren Deckel 22 ausgebildeten oberen Teil des Gehäuses 6 wie in Figur 1a gezeigt nach oben klappen, so dass die Brühkammer 4 von oben zugänglich ist. Der Nutzer kann dann eine Zutatenportion, insbesondere eine Portion loser Teeblätter 24, auf ein Sieb 26 geben, das in die Brühkammer 4 eingesetzt wird. Anschließend wird der Deckel 22 wieder geschlossen und der Nutzer kann durch eine entsprechende Eingabe über die Nutzerschnittstelle 14 einen Brühvorgang starten.

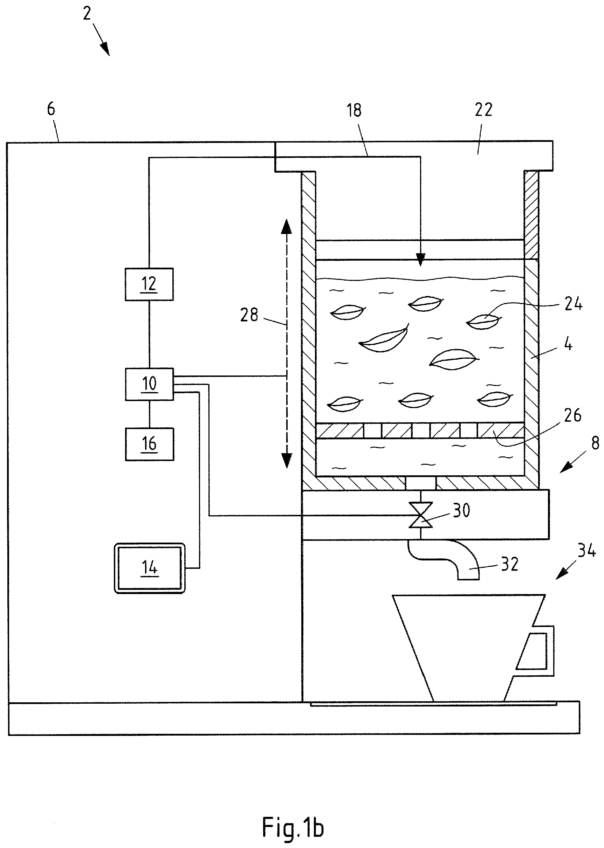

Auf den Befehl des Nutzers steuert die Steuereinrichtung 10 dann die Heißwasserversorgung 12 an, so dass eine vorgegebene Menge Wasser mit einer vorgegebenen Temperatur in die Brühkammer 4 eingeleitet wird. Weiterhin wird das Sieb 26 durch eine von der Steuereinrichtung 10 angesteuerte, beispielsweise magnetisch mit dem Sieb 26 gekoppelte Verfahreinrichtung 28 in die Brühkammer hinabgefahren, so dass die Teeblätter 24 dort mit dem eingeleiteten heißen Wasser in Kontakt kommen. Dies ist in Fig. 1b dargestellt.

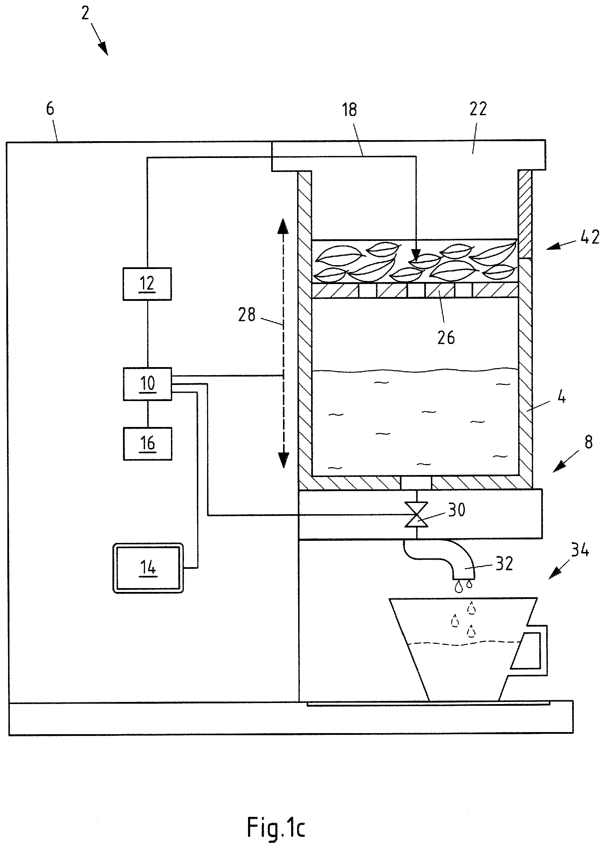

Nach Ablauf einer vorgegebenen Brühdauer steuert die Steuereinrichtung 10 die Verfahreinrichtung 28 an, so dass diese das Sieb 26 und damit die Teeblätter 24 wie in Fig. 1c dargestellt wieder aus dem Wasser in der Brühkammer 4 heraushebt. Das fertige Teegetränk kann dann auf eine Nutzeranforderung, beispielsweise über die Nutzerschnittstelle 14, oder automatisch mittels eines steuerbaren Ventils 30 durch einen Auslass 32 in eine unterhalb der Brühkammer 4 angeordnete Aufnahme 34 für das fertige Teegetränk, beispielsweise eine Tasse oder eine Kanne, abgefüllt werden.

Der Teeautomat 2 weist eine Pressvorrichtung 42 auf, die dazu eingerichtet ist, eine zur Zubereitung eines Teegetränks verwendete Zutatenmenge einer festen pflanzlichen Zutat, wie die Portion Teeblätter 24, separat vom zubereiteten Teegetränk zu einem Pressling zu verpressen.

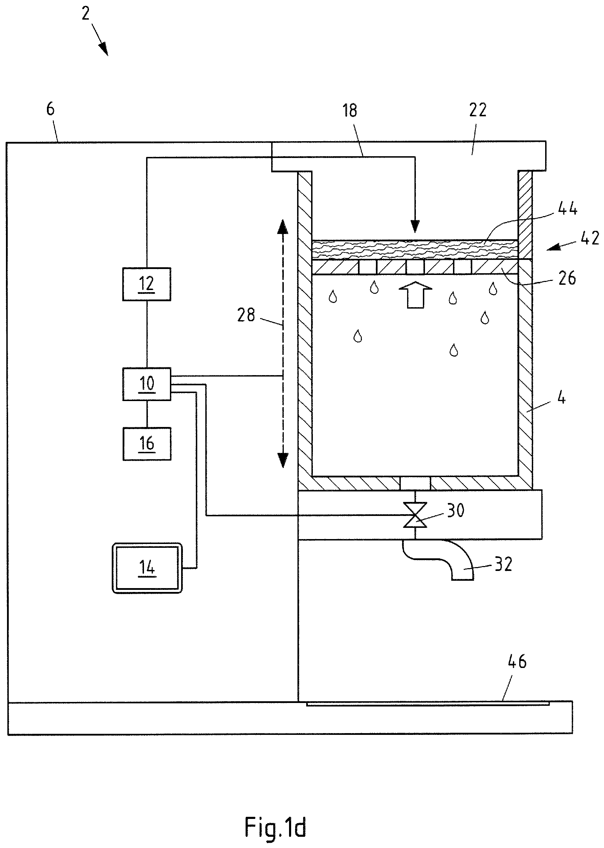

Die Pressvorrichtung 42 umfasst als feststehende Pressplatte den Deckel 22 und als bewegliche Pressplatte das in der Brühkammer verfahrbare Sieb 26. Nach der Ausgabe des fertigen Teegetränks in Fig. 1c bewirkt die Steuereinrichtung 10, dass das Sieb 26 weiter nach oben verfahren wird, so dass die Zutatenportion 24 zwischen dem Sieb 26 und dem Deckel 22 wie in Fig. 1d dargestellt zu einem Pressling 44 verpresst wird. Das in der Zutatenportion 24 noch enthaltene Wasser wird bei dem Pressvorgang ausgedrückt und fließt durch die Sieböffnungen des Siebs 26 in die Brühkammer 4 und kann durch den Abfluss der Brühkammer 4 entsorgt werden. In der in der Fig. 1d gezeigten Ausführungsform des Teeautomaten 2 wird das Wasser beispielsweise durch den Auslass 32 in eine darunter angeordnete Abtropfschale 46 geführt.

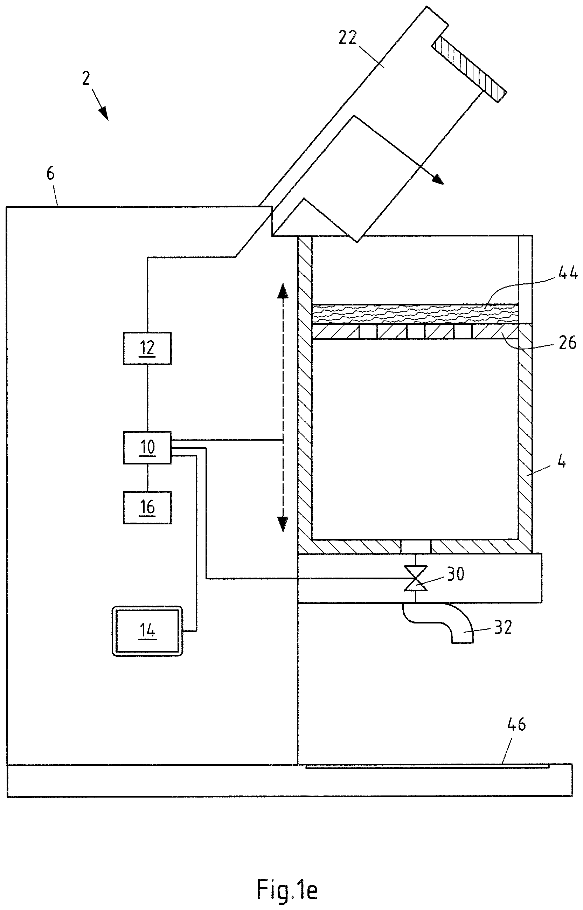

Nach dem Pressvorgang kann der Deckel 22 wie in Fig. 1e dargestellt geöffnet werden. Durch die Positionierung des Siebs 26 zum Deckel 22 wird der Pressling 44 in einer Entnahmeposition bereitgestellt, so dass der Pressling 44, beispielsweise mit einem Löffel oder per Hand, aus dem Teeautomaten 2 entnommen werden kann. Es ist ebenfalls möglich, den Pressling 44 zusammen mit dem Sieb 26 aus dem Teeautomaten 2 zu entnehmen.

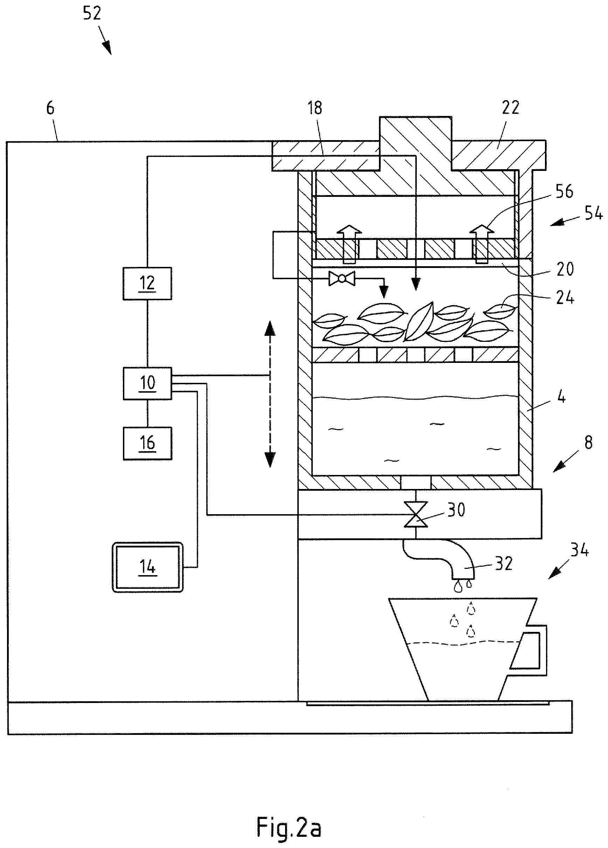

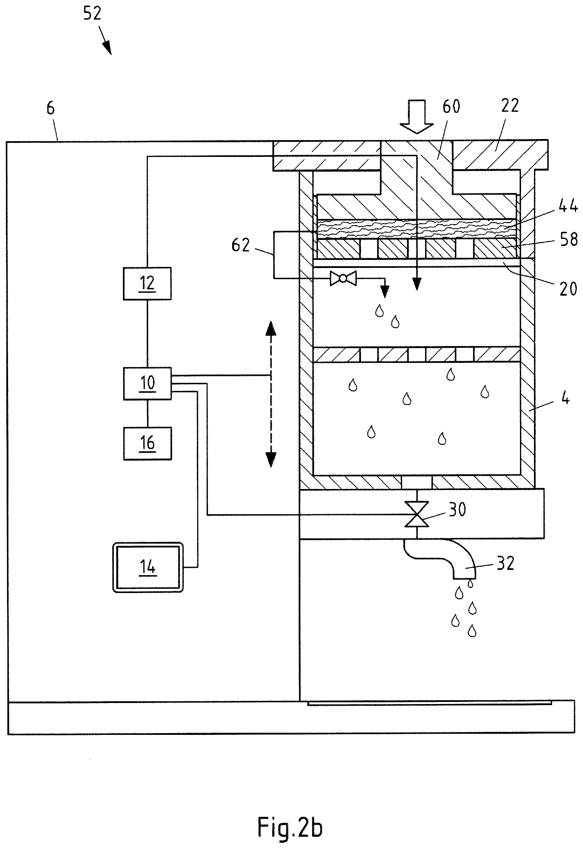

Die Fig. 2a und 2b zeigen ein weiteres Ausführungsbeispiel eines Teeautomaten 52. Der Teeautomat 52 weist einen ähnlichen Aufbau auf wie der Teeautomat 2. Einander entsprechende Komponenten sind jeweils mit gleichen Bezugszeichen versehen.

Anders als bei dem Teeautomaten 2 ist das verfahrbare Sieb 26 nicht Teil der Pressvorrichtung 54, stellt jedoch ein Transportmittel dar, um die Zutatenportion 24 zur Pressvorrichtung 54 zu transportieren. Der Pressvorrichtung 54 selbst ist im Deckel 22 untergebracht.

In der Fig. 2a ist der Teeautomat 52 nach dem Abseihen der Zutatenportion 24 am Ende eines Brühvorgangs dargestellt. Das fertige Teegetränk kann durch den Auslass 32 der Brühkammer 4 in eine darunter angeordnete Tasse 34 ausgegeben werden. Gleichzeitig oder nach der Ausgabe des fertigen Teegetränks, wird die Zutatenportion 24 zu der Pressvorrichtung 54 transportiert, wobei das Sieb 26 und ggf. weitere Transportmittel 56, wie in der Fig. 2a mit dem Pfeil dargestellt, zum Einsatz kommen. Beim Teeautomaten 52 ist die Pressvorrichtung 54 direkt oberhalb der Brühkammer 4 angeordnet. Die Pressvorrichtung 54 kann jedoch auch abseits der Brühkammer 4, z.B. an einer anderen Stelle im Gehäuse 6 angeordnet sein.

Bei dem in der Fig. 2b dargestellten Zustand des Teeautomaten 52 ist das fertige Teegetränk bereits aus der Brühkammer 4 ausgegeben worden. Die Pressvorrichtung 54 weist eine feststehende Pressplatte 58 sowie eine bewegliche Pressplatte 60 in Form eines Stempels auf, der zum Verpressen der Zutatenportion 24 in Richtung der feststehenden Pressplatte verfahrbar ist. Vorzugsweise ist die Steuereinrichtung 10 dazu eingerichtet, das Verfahren der Pressplatte 60 zu bewirken.

Durch die Bewegung der Pressplatte 60 wird die in die Pressvorrichtung 54 transportierte Zutatenportion 24 zu einem Pressling 44 verpresst. Das beim Verpressen austretende Wasser wird durch einen Abfluss 62 der Pressvorrichtung 54 abgeführt, beispielsweise wie in Fig. 2b dargestellt zurück in die Brühkammer 4.

Die Steuereinrichtung 10 ist dazu eingerichtet, nach dem Pressvorgang einen Spülwasserstoß durch die Zuleitung 18 in die Brühkammer 4 zu führen, um diese von dem durch den Abfluss 62 eingeleiteten Wasser aus der Pressvorrichtung 54 zu reinigen.

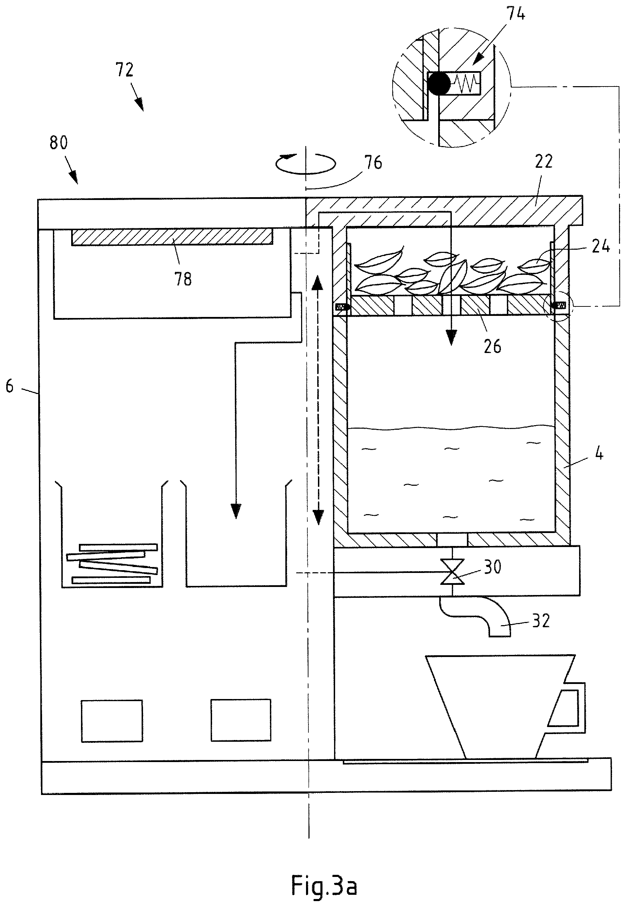

Die Fig. 3a-c zeigen ein weiteres Ausführungsbeispiel des Teeautomaten 72. Der Teeautomat 72 weist wiederrum einen ähnlichen Aufbau auf wie der Teeautomat 2, so dass einander entsprechende Komponenten mit gleichen Bezugszeichen versehen sind. Die Steuereinrichtung 10, die Heißwasserversorgung 12, die Nutzerschnittstelle 14 und der Speicher 16 sind in Fig. 3a-c der Übersicht halber nicht dargestellt.

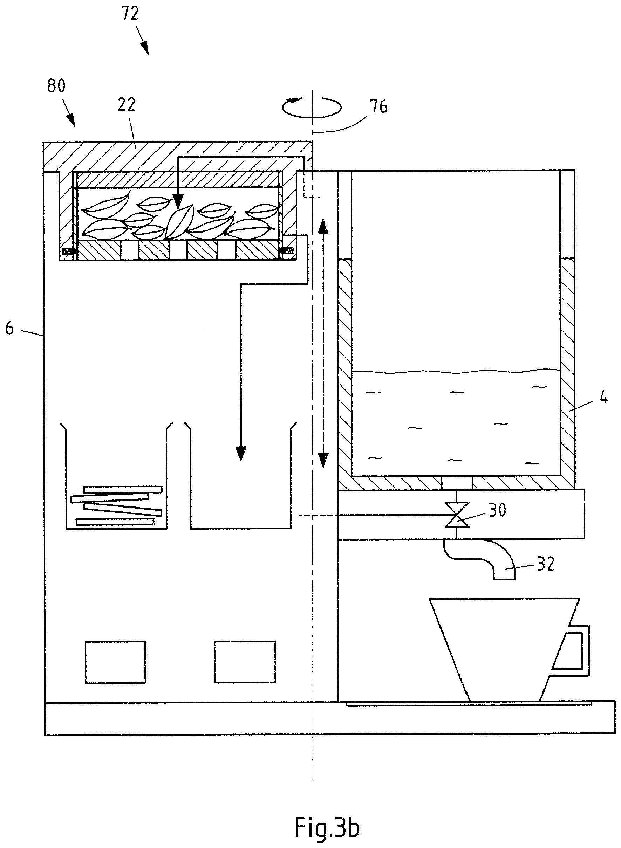

Bei dem Teeautomat 72 kann das Sieb 26 nach einem Brühvorgang mit der darauf befindlichen Zutatenportion 24 bis in den Deckel 22 gefahren und dort über eine lösbare Befestigung 74, hier mit einem Federsystem, fixiert werden. Der Deckel 22 kann bei dem Teeautomaten 72 um eine Achse 76 rotiert werden und dadurch in die in Fig. 3b dargestellte Position gelangen. Der Deckel 22 und das Sieb 26 bilden damit ein Transportmittel für die Zutatenportion 24.

In der in Fig. 3b dargestellten Position greift eine bewegliche Pressplatte 78 zwischen dem Deckel 22 und dem Sieb 26 ein und bildet zusammen mit diesen die Pressvorrichtung 80. Die Pressvorrichtung 80 ist auf diese Weise abseits der Brühkammer 4 ausgebildet.

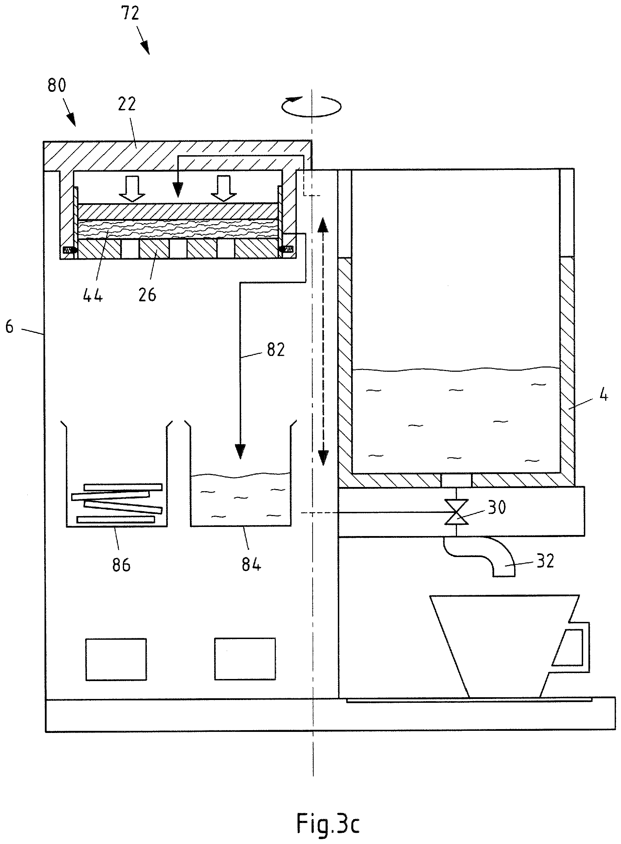

Durch eine Bewegung der Pressplatte 78 in Richtung des Siebs 26 wird die Zutatenportion 24 wie in Fig. 3c dargestellt zu einem Pressling 44 verpresst. Die Pressvorrichtung 80 weist einen Abfluss 82 auf, durch den das beim Verpressen der Zutatenportion 24 austretende Wasser getrennt von der Brühkammer 4 zu einem Abwasserbehälter 84 geführt wird. Auf diese Weise kann das fertige Teegetränk während des Pressvorgangs in der Brühkammer 4 verbleiben, ohne durch aus der Zutatenportion 24 austretendes Wasser beeinträchtigt zu werden. Der Abwasserbehälter 84 ist vorliegend separat von der Abtropfschale 46 ausgebildet. Vorzugsweise weist der Abwasserbehälter 84 ein Volumen auf, der dem Wasservolumen, das bei mehreren Pressvorgängen austritt, entspricht. Auf diese Weise muss der Abwasserbehälter 84 nicht nach jedem Pressvorgang geleert werden. Alternativ kann das Wasser vom Abfluss 82 auch zur Abtropfschale 46 geführt werden.

Der Pressling 44 kann nach dem Pressvorgang beispielsweise zu einem Tresterbehälter 86 des Teeautomaten 72 geführt werden. Der Tresterbehälter ist dazu eingerichtet, mehrere Presslinge 44 aufnehmen zu können, so dass mehrere Pressvorgänge durchgeführt werden können, bevor eine Entleerung des Tresterbehälters 72 erforderlich ist.

Nach Entsorgung des Presslings 44 im Tresterbehälter 72 können der Deckel 22 und das Sieb 26 wieder um die Achse 76 zurück zu der Brühkammer 4 rotiert werden, so dass ein weiterer Brühvorgang durchgeführt werden kann.

Die Steuereinrichtung 10 ist vorzugsweise dazu eingerichtet ist, das Verpressen der Zutatenportion 24 in der Pressvorrichtung 80 zu steuern. Weiterhin ist die Steuereinrichtung 10 vorzugsweise dazu eingerichtet, das Rotieren des Deckels 22 mit dem Sieb 26 zu steuern.

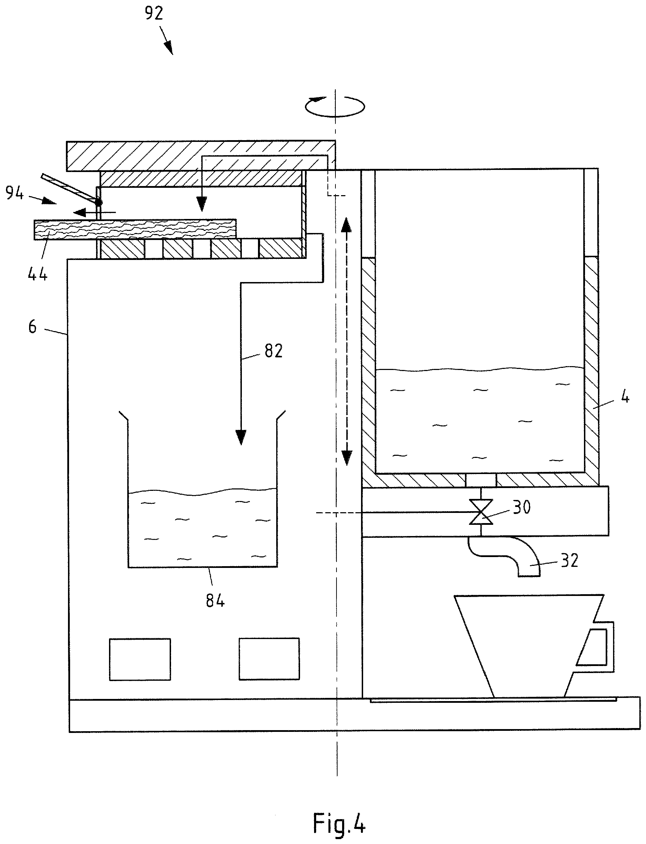

Fig. 4 zeigt ein weiteres Ausführungsbeispiel des Teeautomaten 92. Der Teeautomat 92 weist einen ähnlichen Aufbau und Funktionsweise auf wie der Teeautomat 72 aus Fig. 3a-c. Einander entsprechende Komponenten sind entsprechend mit gleichen Bezugszeichen versehen.

Der Teeautomat 92 unterscheidet sich dadurch vom Teeautomaten 72, dass anstelle eines Tresterbehälters 72 eine Entnahmeöffnung 94 vorgesehen ist. Die Entnahmeöffnung 94 ist derart angeordnet, dass der Pressling 44 nach dem Pressvorgang in einer Entnahmeposition positioniert ist, so dass der Pressling 44 durch die Entnahmeöffnung 94 aus dem Teeautomaten 92 entnehmbar ist.

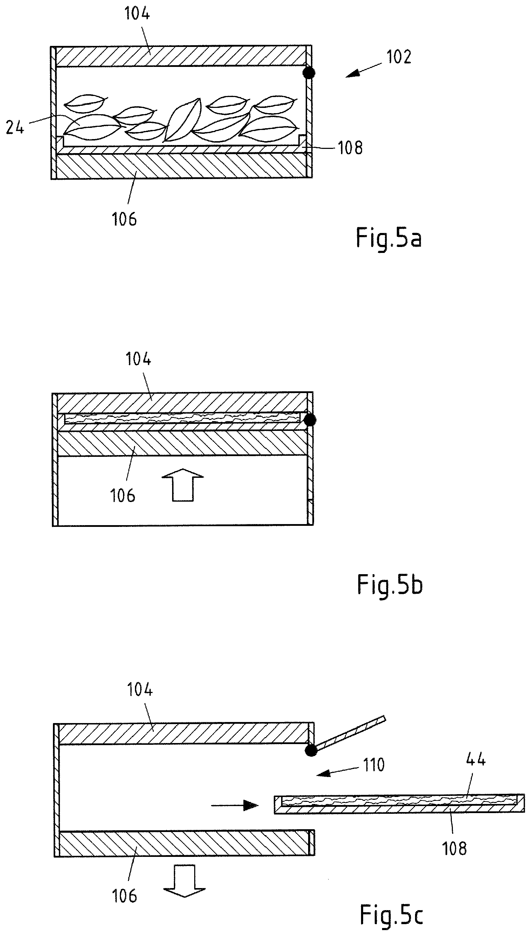

Die Fig. 5a bis 5c zeigen eine Pressvorrichtung 102 für ein weiteres Ausführungsbeispiel des Teeautomaten mit einer oberen festen Pressplatte 104 und einer unteren verfahrbaren Pressplatte 106. Die Pressvorrichtung 102 weist einen Entnahmeträger 108 auf, der auf der verfahrbaren Pressplatte 106 angeordnet ist und damit eine Pressfläche zum Verpressen einer Zutatenportion 24 bildet. Fig. 5a zeigt den Zustand vor dem Pressvorgang, in dem sich eine für einen Brühvorgang verwendete Zutatenportion 24 in der Pressvorrichtung 102 befindet. Fig. 5b zeigt den Zustand während des Pressvorgangs, bei dem die untere Pressplatte 106 gegen die obere Pressplatte 104 gefahren wird, um die Zutatenportion 24 zu einem Pressling 44 zu verpressen. Fig. 5c zeigt den Zustand nach dem Pressvorgang, bei dem die untere Pressplatte 106 wieder nach unten gefahren ist. Dadurch wird der Pressling 44 in einer Entnahmeposition positioniert, aus der der Pressling 44 zusammen mit dem Entnahmeträger 108 durch eine Entnahmeöffnung 110 aus der Pressvorrichtung 102 entnommen werden kann.

## Patentansprüche

1. Teeautomat (2, 52, 72, 92), eingerichtet zur automatischen Zubereitung von Teegetränken in einer Brühkammer (4),
**dadurch gekennzeichnet,**
- **dass** der Teeautomat (2, 52, 72, 92) eine Pressvorrichtung (42, 54, 80, 102) aufweist, die dazu eingerichtet ist, eine zur Zubereitung eines Teegetränks verwendete Zutatenmenge (24), insbesondere eine Menge von Teeblättern, separat vom zubereiteten Teegetränk zu einem Pressling (44) zu verpressen.

2. Teeautomat nach Anspruch 1,
**dadurch gekennzeichnet,**
- **dass** der Teeautomat (2, 52, 72, 92) Transportmittel (56) aufweist, die dazu eingerichtet sind, die Zutatenmenge (24) zur Pressvorrichtung (42, 54, 80, 102) zu transportieren.

3. Teeautomat nach Anspruch 2,
**dadurch gekennzeichnet,**
- **dass** die Transportmittel (56) einen in der Brühkammer (4) verfahrbaren Siebeinsatz (26) umfassen.

4. Teeautomat nach Anspruch 3,
**dadurch gekennzeichnet,**
- **dass** die Pressvorrichtung (42, 54, 80, 102) eine Pressplatte (58, 60, 78, 104, 106) zum Verpressen der Zutatenmenge (24) aufweist und der in der Brühkammer (4) verfahrbare Siebeinsatz (26) die Pressplatte (58, 60, 78, 104, 106) bildet.

5. Teeautomat nach einem der Ansprüche 1 bis 4,
**dadurch gekennzeichnet,**
- **dass** die Pressvorrichtung (42, 54, 80,102) einen Abfluss (62) aufweist, durch den beim Verpressen der Zutatenmenge (24) austretendes Wasser in die Brühkammer (4) geführt wird.

6. Teeautomat nach einem der Ansprüche 1 bis 4,
**dadurch gekennzeichnet,**
- **dass** die Pressvorrichtung (42, 54, 80, 102) einen Abfluss (82) aufweist, durch den beim Verpressen der Zutatenmenge (24) austretendes Wasser getrennt von der Brühkammer (4) zu einem Abwasserbehälter (84) geführt wird.

7. Teeautomat nach einem der Ansprüche 1 bis 6,
**dadurch gekennzeichnet,**
- **dass** der Teeautomat (2, 52, 72, 92) einen Tresterbehälter (72, 86) zur Aufnahme des Presslings (44) aufweist.

8. Teeautomat nach einem der Ansprüche 1 bis 7,
**dadurch gekennzeichnet,**
- **dass** die Pressvorrichtung (42, 54, 80,102) einen Entnahmeträger (26,104) aufweist, vorzugsweise in Form einer Pressplatte (58, 60, 78, 104, 106) der Pressvorrichtung (42, 54, 80, 102), und die Pressvorrichtung (42, 54, 80, 102) dazu eingerichtet ist, den Pressling (44) auf dem Entnahmeträger (26, 104) in einer Entnahmeposition zu positionieren, so dass der Pressling (44) von oder mit dem Entnahmeträger (26, 104) aus dem Teeautomaten (2, 52, 72, 92) entnehmbar ist.

9. Teeautomat nach einem der Ansprüche 1 bis 8,
**dadurch gekennzeichnet,**
- **dass** der Teeautomat (2, 52, 72, 92) eine Steuereinrichtung (10) zur Steuerung des Teeautomaten (2, 52, 72, 92) aufweist, die dazu eingerichtet ist, das Verpressen der Zutatenmenge (24) zu steuern.

10. Teeautomat nach einem der Ansprüche 1 bis 9,
**dadurch gekennzeichnet,**
- **dass** der Teeautomat (2, 52, 72, 92) eine Steuereinrichtung (10) zur Steuerung des Teeautomaten (2, 52, 72, 92) aufweist, die dazu eingerichtet ist, den Teeautomaten (2, 52, 72, 92) entsprechend eines Verfahrens nach einem der Ansprüche 11 bis 14 zu steuern.

11. Verfahren zum Betrieb eines Teeautomaten (2, 52, 72, 92), insbesondere eines Teeautomaten nach einem der Ansprüche 1 bis 10,
- bei dem mit einer Zutatenmenge (24), insbesondere einer Menge von Teeblättern, und einer Wassermenge in einer Brühkammer (4) ein Teegetränk zubereitet wird und
- bei dem die Zutatenmenge (24) nach der Zubereitung des Teegetränks separat von dem zubereiteten Teegetränk zu einem Pressling (44) verpresst wird.

12. Verfahren nach Anspruch 11,
- bei dem während des Verpressens aus der Zutatenmenge (24) austretendes Wasser separat von dem zubereiteten Teegetränk abgeführt wird.

13. Verfahren nach Anspruch 11 oder 12,
- bei dem der Pressling (44) in einer Entnahmeposition positioniert wird, sodass der Pressling (44) durch eine Entnahmeöffnung (94, 108) aus dem Teeautomaten (2, 52, 72, 92) entnehmbar ist.

14. Verfahren nach einem der Ansprüche 11 bis 13,
- bei dem die zum Verpressen verwendete Pressvorrichtung (42, 54, 80,102) nach einem Pressvorgang gespült wird.
